# EUROPÄISCHE PATENTSCHRIFT

(11) **EP 3 010 701 B1**
(45) Veröffentlichungstag und Bekanntmachung des Hinweises auf die Patenterteilung: **20.12.2017**
(21) Anmeldenummer: 14726570.6
(22) Anmeldetag: 22.05.2014
(51) Int. Cl.: B29C 70/30, B29C 53/56, B29C 33/48

(54) **BAUTEIL AUS FASERVERBUNDWERKSTOFF UND VERFAHREN ZU DESSEN HERSTELLUNG**
COMPONENT MADE OF A FIBER COMPOSITE MATERIAL AND PROCESS FOR PRODUCING SAME
ÉLÉMENT EN COMPOSITE RENFORCÉ DE FIBRES ET PROCÉDÉ DE FABRICATION DUDIT ÉLÉMENT

(30) Priorität: 20.06.2013 AT 5042013; 26.08.2013 DE 102013014032
(43) Veröffentlichungstag der Anmeldung: 27.04.2016
(73) Patentinhaber: ThyssenKrupp Presta AG, 9492 Eschen (LI)
(72) Erfinder: HEITZ, Thomas, FL-9493 Mauren (LI); REGNER, Sebastian, 88138 Hergensweiler (DE); SCHACHT, Arne, A-6800 Feldkirch (AT)
(74) Vertreter: thyssenkrupp Intellectual Property GmbH
(86) Internationale Anmeldenummer: PCT/EP2014/060525
(87) Internationale Veröffentlichungsnummer: WO 2014/202325

(56) Entgegenhaltungen:
- EP-A1- 2 361 753
- DE-B3-102012 005 434

## Beschreibung

Die vorliegende Erfindung betrifft ein Bauteil aus Faserverbundwerkstoff gemäß Anspruch 4 sowie ein Verfahren zur Herstellung von solchen Komponenten gemäß Ansprüche 1 oder 2. Bauteile in Faserverbundbauweise übernehmen in vielen Anordnungen strukturelle Aufgaben, bei denen es auf die Zugfestigkeit der Fasern ankommt und insbesondere darauf, dass die Fasern möglichst genau in Lastrichtung verlaufen.
Ein Zielkonflikt bei der technischen Auslegung von Bauteilen, insbesondere für Bauteile von Kraftfahrzeugen, die hohe Kräfte abstützen, wie beispielsweise der Lenksäule, ist die Anforderung an Bauraum, Steifigkeit und Gewicht und Kosten. Zur Zeit werden gattungsgemäße Bauteile bevorzugt aus Stahl, Blech, Aluminium- oder Magnesiumguss hergestellt. Es gibt bereits Bauteile, insbesondere auch in Kraftfahrzeugen, hergestellt aus Kunststoffen und oder in Fasertechnologien / Faserverbundtechnologien. Diese sind aber entweder sehr teuer oder die Technologien können nicht für den jeweiligen Anwendungsfall eingesetzt werden, da die Anforderungen an die Übertragung von Kräften nicht erfüllt werden können.

Faserverbundwerkstoffe bestehen aus verstärkenden Fasern die in einer Matrix eingebettet sind. Im Allgemeinen gilt, dass die spezifische Steifigkeit eines Faserverbundwerkstoffs oder eines Hybridwerkstoffs aus Metall und Faserverbundmaterial höher ist als die von Metall allein. Die höherwertigen Eigenschaften werden erst durch das Zusammenspiel beider Komponenten erreicht. Es gibt eine Vielzahl von Herstellungsverfahren in denen die mit einem Matrixwerkstoff vorimprägnierten Fasern verarbeitet werden. Eines der etablierten Herstellungsverfahren ist das Faserwickelverfahren. Bei dem Faserwickelverfahren werden Endlosfaserstränge (Rovings) in einem kontinuierlichen Prozess auf einen Wickelkern gewickelt. Dabei werden die Fasern häufig im selben Arbeitsgang mit einem Matrixharz durchtränkt und nass imprägniert oder es werden ungetränkte Fasern verarbeitet, die nach dem Wickelprozess mit einem Harzinjektionsverfahren getränkt werden. Das Faserwickelverfahren zeichnet sich durch eine hohe Laminatqualität und eine hohe Genauigkeit im Faserharzgehalt und in der Faserorientierung bei gleichzeitig hohem Automatisierungsgrad und hoher Wirtschaftlichkeit aus.

In der EP 1 268 164 B1 sind ein fachwerkartiges Bauteil aus faserverstärktem Kunststoff und ein Verfahren zur Herstellung desselben offenbart. Die Herstellung des fachwerkartigen Bauteils erfolgt in Abhängigkeit von der zu erwartenden oder vorgegebenen Belastung durch das Faserwickelverfahren. Dazu sind eine Anzahl von Wickelspulen auf einer Wickelplatte vorgesehen, um die die vorimprägnierte Faser gewickelt wird. Die Hohlräume zwischen den so entstehenden Außengurtteilen und der Zwischenstruktur sind wenigstens bereichsweise mit einem Füllmaterial ausgefüllt. Das Füllmaterial stützt die auf Druck belasteten Abschnitte der fachwerkartigen Zwischenstruktur und verhindert ein unkontrolliertes Ausknicken bei Überschreitung der Belastung, für die sie ausgelegt sind. Fachwerkartige Strukturen zeichnen sich durch ihr hohes Maß an Stabilität aus. Es ist vorgesehen diese Elemente als Träger z.B. in einem Fahrzeugchassis einzusetzen, wobei das Füllmaterial u.a. die Energieaufnahme im Crashfall begünstigt. Durch die vorgegebene fachwerkartige Struktur kann die Form und der Verlauf der Verstärkung das Trägerbauteil nicht individuell gestaltet werden. Zwar kann die Verstärkung der Belastung durch eine unterschiedliche Anzahl von Fasern angepasst werden, aber eine spezifische Ausgestaltung entlang von Kraftlinien eines Bauteils ist nicht möglich.

Die EP 2 361 753 A1 beschreibt ein Verfahren zur Herstellung eines Hohlprofilbauteils aus einem Faserverbundwerkstoff mit den Merkmalen des Oberbegriffs der Ansprüche 1 oder 2. Das bekannte Verfahren ermöglicht jedoch nicht, Schnittstellen oder Funktionsflächen an einem Faserverbundbauteil auszubilden, die nicht oder nicht effizient gewickelt werden können.

Es ist daher die Aufgabe der vorliegenden Erfindung individuell ausgeformte Bauteile, insbesondere auch Komponenten von Kraftfahrzeugen, in Faserverbundtechnologie aus einem Faserverbundwerkstoff zu schaffen, die hohe Festigkeitseigenschaften und Steifigkeitseigenschaften und ein geringes Gewicht aufweisen. Weiterhin soll ein Fertigungsverfahren für derartige Bauteile geschaffen werden, welches eine definierte Auslegung der Bauteile ermöglicht. Dabei soll ermöglicht werden, Schnittstellen oder Funktionsflächen an einem Faserverbundbauteil auszubilden, die nicht oder nicht effizient gewickelt werden können.

Diese Aufgabe wird von einem Verfahren mit den Merkmalen des Anspruchs 1 oder 2 und von einem Bauteil mit den Merkmalen des Anspruchs 5 gelöst. In den Unteransprüchen sind vorteilhafte Weiterbildungen der Erfindung dargestellt.

Danach ist ein Verfahren zur Herstellung eines Bauteils aus Faserverbundwerkstoff, insbesondere eines Bauteils für Kraftfahrzeuge vorgesehen, das folgende Schritte aufweist:
a) Wickeln von Fasern entlang vorgegebener Bahnen um wenigstens eine Wickelspule eines Wickelkerns;
b) Einbringen eines aushärtbaren Harzes in die Fasern;
c) Aushärten des Harzes und Bildung des Faserverbundbauteils;
d) Entnahme der wenigstens einen Wickelspule nach innen in den Wickelkern;
e) Entnahme des Wickelkerns und Freisetzen des Faserverbundbauteils;
wobei
0) vor dem Wickeln ein oder mehrere Funktionselemente (13) an vordefinierten Stellen auf dem Wickelkern (11) positioniert werden, um durch die daran anschließenden Verfahrensschritte mit den Fasern verbunden zu werden, um mit dem Faserverbundbauteil ein einstückiges Bauteil zu bilden.

Die vorgesehenen Funktionselemente des Bauteils sind bevorzugt ausgewählt aus der Gruppe, die Befestigungselemente, Führungen, Bewegungsbegrenzungen, Lager und Halter für Kabelbäume umfasst.

In einer weiteren Ausführungsform sind die Funktionselemente Blechlaschen mit Öffnungen, Bohrungen oder Ausnehmungen. Auch Sinterformteile oder Gussteile können als Funktionselemente der Bauteile integriert werden. Des Weiteren können auch andere Formteile aus verschiedenen Metallen oder Kunststoff als Funktionselemente eingesetzt werden. Das erfindungsgemäße Verfahren ist hier besonders flexibel.

In einem weiteren Schritt kann unter Einbau des Bauteils aus Faserverbundwerkstoff, was auch als Faserverbundbauteil bezeichnet wird, die Montage einer entsprechenden Baugruppe für ein Kraftfahrzeug erfolgen. Ein Beispiel für eine derartige Baugruppe ist mit einer Lenksäulenanordnung eines Kraftfahrzeuges gegeben.

In einer alternativen Ausführungsform erfolgt nach dem Schritt a) das Verbringen des umwickelten Wickelkerns in eine Werkzeugform und nach dem Schritt c) die Entnahme des Faserverbundbauteils inklusive Wickelkern aus der Werkzeugform. Im Schritt b) wird dann das Harz in die Werkzeugform eingebracht.

In einer alternativen Ausführungsform sind die Fasern bereits vor dem Wickeln mit einem aushärtbaren Harz getränkt oder beschichtet, so dass das nachträgliche Einbringen des aushärtbaren Harzes auch entfallen kann. Entsprechend ergibt sich eine geringfügig veränderte Abfolge, die aber zu demselben Ergebnis führt. In dieser alternativen Ausführung umfasst das Verfahren folgende Schritte:
a) Wickeln von Fasern entlang vorgegebener Bahnen um wenigstens eine Wickelspule eines Wickelkerns, wobei die Fasern mit einem aushärtbaren Harz getränkt sind;
b) Aushärten des Harzes und Bildung des Faserverbundbauteils;
c) Entnahme der wenigstens einen Wickelspule nach innen in den Wickelkern;
d) Entnahme des Wickelkerns und Freisetzen des Faserverbundbauteils;
wobei
0) vor dem Wickeln ein oder mehrere Funktionselemente (13) an vordefinierten Stellen auf dem Wickelkern (11) positioniert werden, um durch die daran anschließenden Verfahrensschritte mit den Fasern verbunden zu werden, um mit dem Faserverbundbauteil ein einstückiges Bauteil zu bilden.

Die vorgesehenen Funktionselemente des Bauteils sind bevorzugt ausgewählt aus der Gruppe, die Befestigungselemente, Führungen, Bewegungsbegrenzungen, Lager und Halter für Kabelbäume umfasst.

In einer weiteren Ausführungsform sind die Funktionselemente Blechlaschen mit Öffnungen, Bohrungen oder Ausnehmungen. Auch Sinterformteile oder Gussteile können als Funktionselemente der Bauteile integriert werden. Des Weiteren können auch andere Formteile aus verschiedenen Metallen oder Kunststoff als Funktionselemente eingesetzt werden. Das erfindungsgemäße Verfahren ist hier besonders flexibel.

In einer Ausführungsform erfolgt nach dem Schritt a) das Verbringen des umwickelten Wickelkerns in eine Werkzeugform und nach dem Schritt c) die Entnahme des Faserverbundbauteils inklusive Wickelkern aus der Werkzeugform

Auch in der alternativen Ausführungsform kann zusätzlich ein aushärtbares Harz in die Werkzeugform eingebracht werden, bevor der Verfahrensschritt mit dem Aushärten des Harzes erfolgt.

Auch in der alternativen Ausführungsform kann in einem weiteren Schritt unter Einbau des Bauteils aus Faserverbundwerkstoff, was auch als Faserverbundbauteil bezeichnet wird, die Montage einer entsprechenden Baugruppe für ein Kraftfahrzeug erfolgen.

Bevorzugt ist die Anwendung des Verfahrens für Bauteile oder Baugruppen in einem Kraftfahrzeug, die hohe Kräfte oder Drehmomente übertragen müssen. Besonders bevorzugt ist dabei die Anwendung des Verfahrens für Bauteile, die keine geschlossenen Profile bilden. So können in einfacher Weise U-Profile oder W-Profile oder flächige Bauteile mit dem Verfahren dargestellt werden. Insbesondere können sehr gut Bauteile dargestellt werden, die im Kraftfluss zwischen dem Kraftfahrzeugaufbau und der Karosserie angeordnet sind.

Durch die Wicklung der Fasern werden Faserstränge gebildet.

Vorzugsweise werden in einem Verfahrensschritt vor dem Wickeln ein oder mehrere Funktionselemente an vordefinierten Stellen auf dem Wickelkern positioniert, um durch die daran anschließenden Verfahrensschritte mit den Fasern verbunden zu werden, um mit dem Faserverbundteil ein einstückiges Bauteil zu bilden. Die Funktionselemente verbleiben in dem Bauteil, sie bilden Schnittstellen und Funktionsflächen aus, die nicht effizient gewickelt werden können.

Zudem kann bevorzugt vorgesehen sein, dass in einem Verfahrensschritt vor dem Wickeln ein Hilfsmaterial auf den Wickelkern aufgebracht wird, das die Fasern in Form und Lage hält, bis diese durch Aushärten des Harzes fixiert sind. Dieses Hilfsmaterial kann ein Gewebe oder ein Gelege sein, das mit der Matrix ebenso einen Faserverbund bildet und zur Aufnahme von Grundlasten, zur Einleitung von Lasten oder als kraftfreie Struktur dient.

Nach einer bevorzugten Ausführungsform ist der faserverstärkte Kunststoff eine Kombination verschiedenartiger Faserstrukturen mit gleichgerichteten Fasern.

Vorzugsweise weist das Bauteil Faserstränge auf, deren Fasern entlang einer Hauptkraftflussrichtung zwischen einer Auswahl aus jeweils zwei Funktionselementen, mit denen das Bauteil abgestützt ist, in im Wesentlichen gerader Linie und zueinander im Wesentlichen parallel ausgerichtet sind, wobei zwischen derartig ausgebildeten Fasersträngen Raumbereiche ausgebildet sind, in denen keine Fasern und auch kein Kunststoff angeordnet sind. Mit anderen Worten sind die Fasern, zusammengefasst als Faserstränge, wie in einer Fachwerk-Tragstruktur parallel zueinander ausgerichtet. Die Einschränkung "im wesentlichen" bezieht sich auf zulässige Abweichungen, von der Geradheit oder Parallelität, in Bereich von wenigen Winkelgraden, sicher weniger als 5 oder bevorzugt weniger als 3 Winkelgrad.

Zur Darstellung von Bauteilen, wie beispielswese der Konsole einer Lenksäule, des Schwenkhebels oder der Lenkspindellagereinheit, ist es besonders zu bevorzugen, dreidimensionale Faserstränge auszubilden, wobei mindestens einer der Faserstränge winklig angeordnet ist zu der Ebene, die durch zumindest zwei andere Faserstränge aufgespannt wird. Entsprechend ist mit Vorzug zumindest ein Funktionselement in einer anderen Ebene, im Vergleich zur durch die zumindest zwei Faserstränge aufgespannten Ebene, angeordnet.

Weiterhin können einzelne Faserstränge stetig differenzierbar gebogen ausgebildet sein, wobei innerhalb des Faserstrangs die einzelnen Fasern im Wesentlichen parallel zueinander ausgerichtet sind. Dies ist besonders dann von Vorteil, wenn der Kraftfluss über verschiedene Ebenen hinweg geleitet werden muss, insbesondere um eine Umbiegung oder Kante geleitet werden muss und ein im Kraftfluss angeordnetes Funktionselement am Bauteil nicht vorgesehen ist. Durch die stetig differenzierbare Linienführung erfolgt die Kraftweiterleitung mit reduzierter Knickgefahr oder Kerbwirkung.

Vorzugsweise ist das Bauteil unter Verwendung eines Wickelkerns gefertigt, der zur Fertigstellung der Bauteils oder vor der Montage des Bauteils in der Baugruppe von dem Bauteil getrennt und nicht in der Baugruppe enthalten ist. Dieser Wickelkern weist eine zum Verlauf der Faserstränge gegengleiche Kontur auf. Insbesondere die Ausbildung von stetig differenzierbar gebogenen Fasersträngen ist dadurch einfach möglich. Das erfindungsgemäße Bauteil und auch die daraus gebildete Baugruppe weist eine sehr hohe Steifigkeit und Robustheit auf, obgleich nur wenige Faserstränge mit großen Zwischenräumen zur Bildung des Bauteils dienen. Dies wird möglich, da die Belastungen entweder entlang der Faserstränge oder quer zu den Fasersträngen über angrenzende Bauteile der Baugruppe aufgenommen werden. Das Bauteil muss entsprechend nicht die Belastungen in allen Richtungen selbst aufnehmen bzw. selbst den Belastungen standhalten.

Eine bevorzugte Ausführungsform der Erfindung wird nachfolgend anhand der Zeichnungen näher erläutert. Dabei werden als Beispiele Bauteile einer Lenksäulenanordnung dargestellt. Die Erfindung ist aber auch auf andere Bauteile anwendbar. Es zeigen:
- Fig. 1:: eine räumliche Darstellung einer Lenksäulenanordnung aus dem Stand der Technik,
- Fig. 2:: eine räumliche Darstellung eines Wickelkerns mit Wickelspulen und Funktionselementen,
- Fig. 3:: eine schematische Darstellung des Wickelvorgangs,
- Fig. 4:: eine räumliche Ansicht des Wickelkerns nach dem Wickelvorgang,
- Fig. 5:: eine räumliche Ansicht des Wickelkerns aus Figur 4 mit angegebener Spannrichtung,
- Fig. 6:: eine Explosionszeichnung des bewickelten Wickelkerns mit einer Werkzeugform,
- Fig. 7:: eine räumliche Darstellung der geschlossenen Werkzeugform,
- Fig. 8 und 9:: zwei räumliche Ansichten einer erfindungsgemäßen Konsole,
- Fig. 10:: eine räumliche Ansicht der erfindungsgemäßen Konsole aus Fig. 7 und Fig. 8 ohne Funktionselemente, sowie
- Fig. 11:: eine räumliche Darstellung einer erfindungsgemäßen Lenksäulenanordnung.

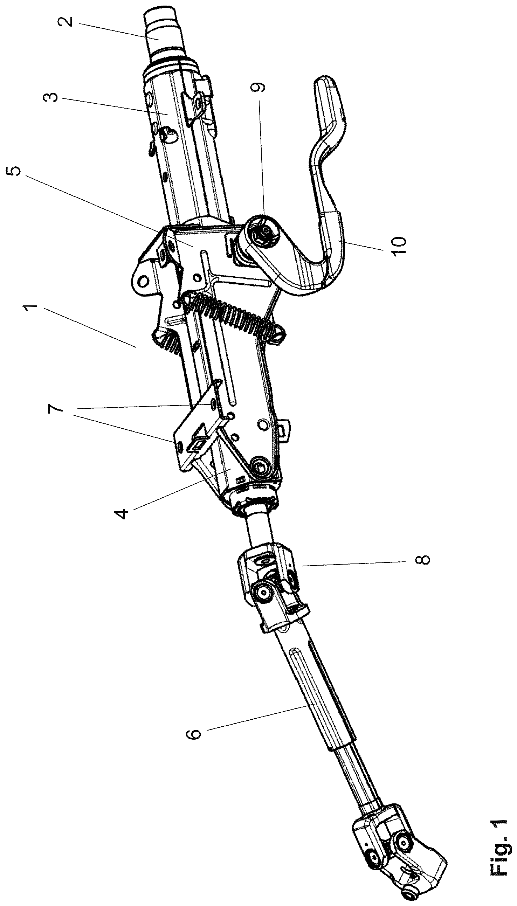

In der Figur 1 ist eine an sich bekannte Lenksäule 1 mit einer Lenkspindel 2, einem Mantelrohr 3, einem Schwenkhebel 4, einer Konsole 5 und einem Lenkwellenteil 6 dargestellt. Die Lenkspindel 2 ist in dem Mantelrohr 3 drehbar gelagert. Das Mantelrohr 3 ist in dem Schwenkhebel 4 entlang der Längsachse der Lenkspindel 2 verschiebbar geführt. Der Schwenkhebel 4 ist um eine Schwenkachse in der Konsole 5 schwenkbar gelagert. Die Konsole 5 kann dabei an Befestigungspunkten 7 an der nicht dargestellten Karosserie befestigt werden. Die von einem Fahrer über ein Lenkrad in die Lenkspindel 2 eingebrachte Drehbewegung wird über ein Kardangelenk 8 und weitere Lenkwellenteile 6 in das nicht dargestellte Lenkgetriebe eingebracht. Die Lenksäule 1 kann zur Erhöhung des Komforts des Fahrers in ihrer Höhe und ihrer Länge verstellt werden. Hierzu ist ein Fixiermechanismus vorgesehen, der einen Spannapparat umfasst. Der Spannapparat weist einen Spannbolzen 9, einen Spannhebel 10 und einen nicht gezeigten Nockenmechanismus auf. Durch Verdrehung des Spannhebels 10 werden die beiden Nocken des Nockenmechanismus gegeneinander verdreht und die Seitenwangen der Konsole 5 zusammengezogen, wodurch eine reibschlüssige Verspannung der Seitenwangen der Konsole 5 mit den Seitenflächen des Schwenkhebels 4 und wiederherum mit den Seitenflächen des Mantelrohrs 3 erfolgt. Derartige Lenksäulen sind im Stand der Technik bekannt, so dass hier auf eine genaue Darstellung verzichtet wird. Alternativ zum Beispiel kann die Lagerung der Lenkspindel 2 auch in einer nicht rohrförmig ausgebildeten Lenkspindellagereinheit, die auch als Manteleinheit bezeichnet werden kann, erfolgen. Ebenso kann die Fixierung der Lenkspindellagereinheit oder des Mantelrohrs 3 gegenüber der Konsole mittels eines Formschlusses, beispielsweise einer Verzahnung dargestellt sein. Derartige Lenksäulen sind beispielsweise auch mit von der Erfindung umfasst.

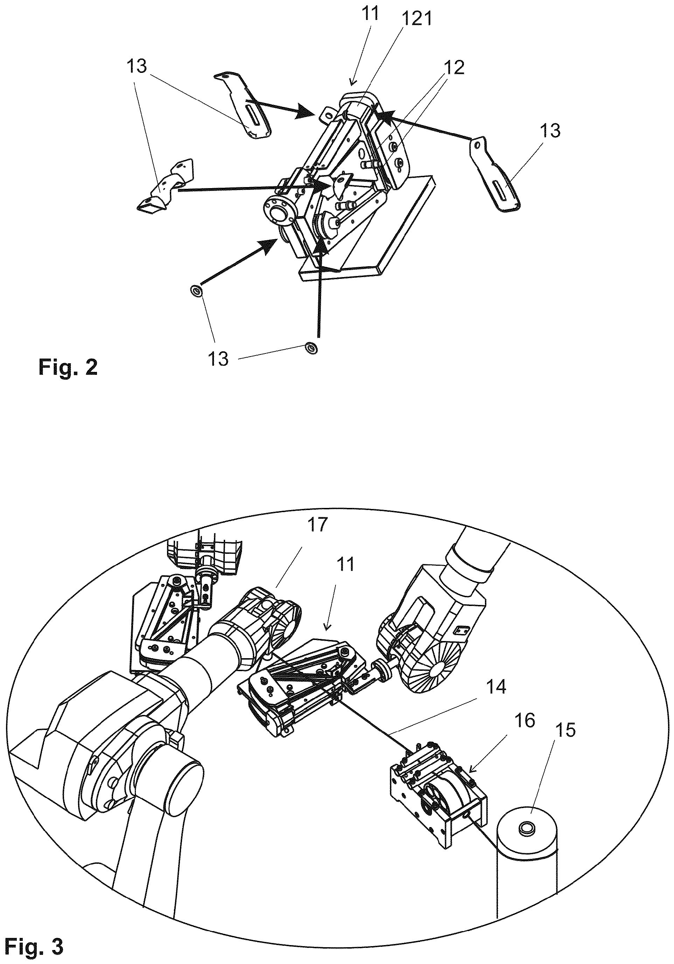

Figur 2 zeigt einen Wickelkern 11 eines erfindungsmäßen Bauteils, hier einer Konsole 55, mit einer Vielzahl von Wickelspulen 12, 121, sowie Funktionselementen 13. Vor dem Wickelprozess werden die Funktionselemente 13 auf dem Wickelkern 11 positioniert und während des Wickelvorgangs gemeinsam mit dem Wickelkern 11 entlang der Wickelspulen 12, 121 umwickelt. Im Sinne der Erfindung können die Wickelspulen nicht nur durch einfache zylindrische Spulen 12 gebildet sein. Jeder geformte Teilbereich des Wickelkerns 11, um die die Rovings gewickelt werden, ist unter dem Begriff "Wickelspule" subsumiert. Nach Beendigung des Wickelprozesses wird der Wickelkern 11 entnommen, die Funktionselemente 13 hingegen verbleiben im Bauteil, sie bilden Schnittstellen und Funktionsflächen aus, die nicht effizient gewickelt werden können. Solche Funktionselemente umfassen zum Beispiel Befestigungselemente oder Lager.

Figur 3 zeigt schematisch das erfindungsgemäße Verfahren, das bevorzugt zur Herstellung der Komponenten einer Lenksäule aus faserverstärktem Kunststoff zum Einsatz kommt. Im Beispiel ist die Darstellung der Konsole 55 veranschaulicht. Es kann jedoch auch das Mantelrohr oder eine andere Lenkspindellagereinheit oder der Schlitten, falls vorhanden, oder ein anderes kraftübertragendes Bauteil mit dieser Technologie ausgebildet werden. Eine unter Vorspannung gehaltene Faser 14 wird von einer Vorratsspule 15 abgezogen und durch eine Imprägniereinheit 16 geführt. Die Imprägniereinheit 16 kann als Tauchtränkvorrichtung oder, wie beispielsweise dargestellt, als Walzenimprägniervorrichtung ausgebildet sein. Die imprägnierte Faser 14 wird zur Bildung der Faserstränge 141, 142 mittels einer Führungseinheit 17, die mit einer rechnergesteuerten Wickelmaschine verbunden ist, auf einen mit der Führungseinheit 17 synchronisiert bewegten Wickelkern 11 einer Konsole abgelegt. Im Beispiel ist erkennbar, dass die Wickeloperation dreidimensional erfolgt, das heißt die Fasern werden nicht nur in einer Ebene gewickelt, sondern so dass eine dreidimensionale Faserstrangstruktur entsteht. Bevorzugt erfolgt diese Wickeloperation ohne Unterbrechung, so dass alle Faserstränge 141, 142 durch eine einzige fortlaufende Faser 14 gebildet sind.

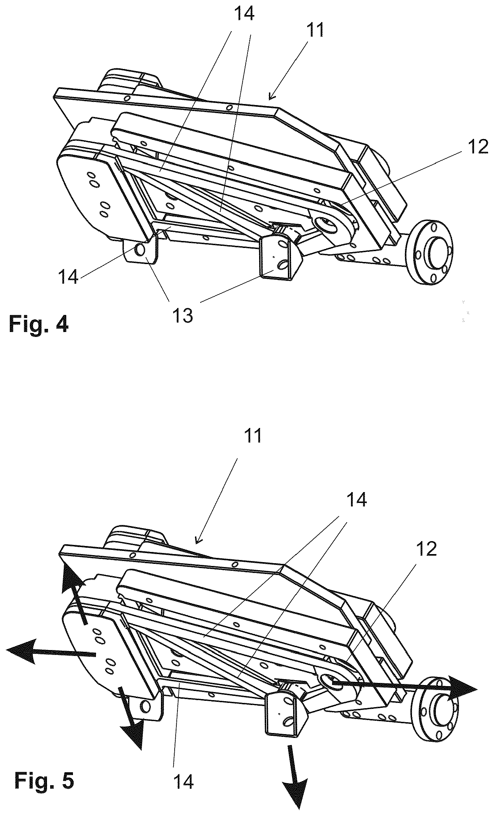

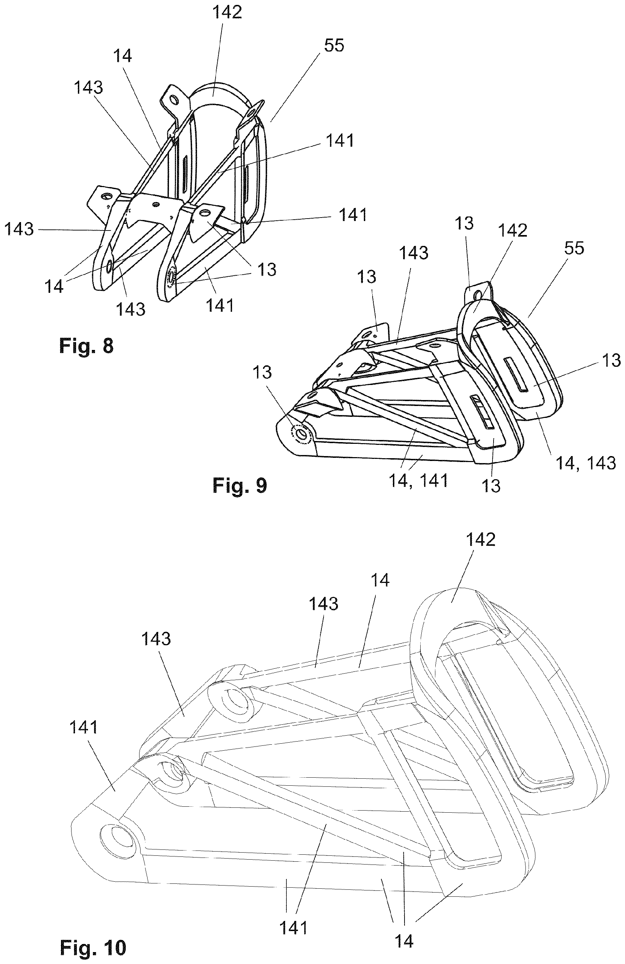

In der Figur 4 ist der Wickelkern 11 mit den Funktionselementen 13 im umwickelten Zustand dargestellt. Die von der Vorratsspule als Roving abgezogene, imprägnierte Faser wird nach einem vorgegebenen Wickelplan auf die Wickelspulen 12, 121 und um die Funktionselemente 13 abgelegt. Der Wickelplan ist entsprechend der Bauteilgeometrie festzulegen. Bei der Auslegung des Wickelplans werden die Kraftflussrichtungen in der Konsole analysiert und durch die gezielte Ablage von Fasern 14 in Kraftflussrichtung zur Bildung der Faserstränge 141, 142, 143 werden die Festigkeitseigenschaften und Steifigkeitseigenschaften des Werkstoffs optimal ausgenutzt. Dies geschieht durch Anpassung von Faservolumengehalt, Faserorientierung und Faseranzahl entsprechend dem Kraftfluss. Zudem wird durch die gezielte Ablage der Fasern das Gewicht der Konsole reduziert. Zur Fertigung der Konsole wird mindestens ein Wickelumlauf durchgeführt. Werden mehrere Wickelumläufe durchgeführt, so können sich die Fasern in den Kreuzungspunkten aus wechselnden Richtungen überkreuzen, wodurch die Festigkeit quer zur Wicklung verstärkt wird. Das Wickeln wird räumlich durchgeführt. Dazu wird der Wickelkern rechnergesteuert rotiert oder auf einer Drehachse gelagert, so dass die Fasern um den Kern herumgeführt werden können. Im Beispiel (siehe auch Fig. 8, 9) ist zu erkennen, wie die Wickelspule 121 nicht in der Ebene liegt, die durch die Faserstränge 141 oder Faserstränge 143 gebildet wird. Entsprechend wird ein Faserstrang 142 beim Umwickeln gebildet, der aus der Ebene, die durch die Faserstränge 141 oder die Faserstränge 143 gebildet wird, herausragt.

Bei dem Wickelplan ist zu berücksichtigen, dass die Fasern möglichst lange gerade geführt werden, bevor die Wickelrichtung und damit die Orientierung der Fasern geändert wird. Dadurch werden Stellen bzw. Knicke der Fasern, die einen Bruch verursachen können, minimiert. Unter dem gleichen Aspekt kann in einem weiteren Fertigungsschritt nach dem Wickeln das Spannen der Fasern, wie in Figur 5 gezeigt, vorgesehen sein.

In der Figur 5 zeigen die Pfeile die Spannrichtungen des Wickelkerns 11 an. Die Spannung kann zum Beispiel mechanisch durch Verfahren der Wickelspulen 12 erzeugt werden oder durch elastische Wickelspulen, die beim Ablegen nachgeben und sich danach zurückstellen. Durch die auf die Fasern aufgebrachte Spannung werden die Fasern vorgespannt, so dass Knicke in den Fasern reduziert werden. Dieser Prozess erhöht die Festigkeit und die Steifigkeit des Faserverbundwerkstoffs in Ablagerichtung.

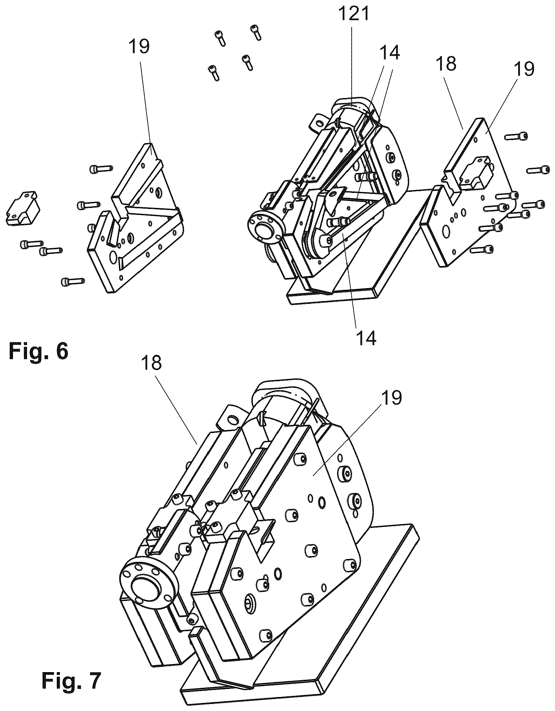

Nach dem Wickeln wird die Matrix der Faser ausgehärtet. Zur Formgebung wird im Beispiel der umwickelte Wickelkern 11 von einer Werkzeugform 18, wie in Figur 6 und Figur 7 dargestellt, umgeben. Die hier dargestellte Werkzeugform 18 weist zwei Platten 19 auf, die jeweils an einer Seite des Wickelkerns 11 mittels Schraub- oder Steckverbindungen den gewickelten Teil überdeckend angebracht werden. Die Werkzeugform 18 presst dabei die vorimprägnierten Fasern zwischen den Platten 19 und dem Wickelkern 11 in die gewünschte Form. So kann der Querschnitt des Werkstücks und der Faservolumenanteil beeinflusst werden. Danach erfolgt die Aushärtung des Werkstücks in der Werkzeugform 18 zum Beispiel über eine beheizte Werkzeugform oder durch Einbringen der Werkzeugform 18 in einen Durchlaufofen.

Nach dem Aushärten werden die Werkzeugform und der Wickelkern inklusive der Wickelspulen entfernt. Der Wickelkern ist dazu so ausgestaltet, dass die Wickelspulen nach innen in den Wickelkern entnommen werden können und daraufhin der Wickelkern zu Entnahme aus der ausgehärteten Konsole freigegeben ist.

Die erfindungsgemäße ausgehärtete Konsole 55 ist in Figur 8 und Figur 9 gezeigt. Neben dem Konstrukt aus Faserverbundwerkstoff, gebildet durch die Faserstränge 141, 142, 143 sind die einzelnen umwickelten Funktionselemente 13 zu sehen. Im Beispiel ist zu erkennen, wie das Bauteil zwei parallele Ebenen durch die parallel zueinander ausgerichteten Faserstränge 141 und 143, sowie einen die beiden Ebenen verbindenden Faserstrang 142, umfasst.

Figur 10 hingegen zeigt die ausgehärteten Faserstränge 141, 142 und 143 der Konsole aus den vorhergehenden Figuren ohne Funktionselemente.

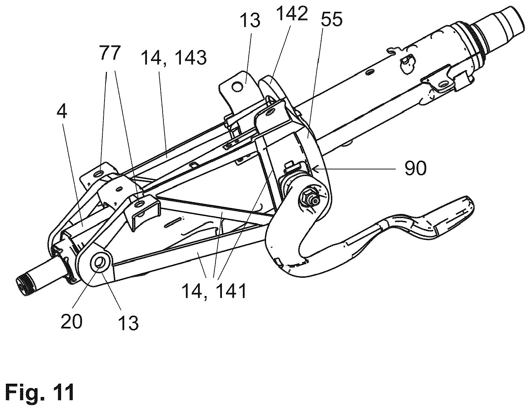

In der Figur 11 ist die erfindungsgemäße Lenksäulenanordnung mit Faserverbundwerkstoff-Konsole 55 gezeigt. Die integrierten Funktionselemente 13 dienen als Lager 20 für die Schwenkachse des Schwenkhebels 4 und als Befestigungselemente 77 für die Befestigung der Konsole 55 an der hier nicht gezeigten Karosserie, sowie für die Führungselemente des Fixiersystems 90.

Im Gegensatz zu gattungsgemäßen Lenksäulen, wie sie in Figur 1 dargestellt sind, weist die erfindungsgemäße Lenksäulenanordnung aus Figur 11 durch den Einsatz von Faserverbundwerkstoffen ein geringes Gewicht auf, wobei ausreichende Festigkeit und Steifigkeit erreicht ist oder sogar eine erhöhte Festigkeit und erhöhte Steifigkeit erreicht ist.

Die Einsparung von Gewicht führt zu einer günstigen Beeinflussung des Kraftstoffverbrauchs sowie zur Erhöhung der Reichweite von Elektromobilen. Durch die kraftflussgerechte Gestaltung und die hohe Festigkeit in Faserrichtung kann der Bauraum klein gehalten werden. Weiterhin wird durch die erhöhte Steifigkeit der Konsole die Eigenfrequenz der Lenksäulenanordnung positiv beeinflusst, so dass die Schwingungen am Lenkrad, die durch die Lenksäule übertragen werden, zur Verbesserung der Komforteigenschaften beim Fahren deutlich minimiert werden.

In einem anderen hier nicht dargestellten Ausführungsbeispiel wird der Schwenkhebel nach dem vorhergehend beschriebenen Verfahren aus Faserverbundwerkstoff hergestellt. Alle Komponenten der Lenksäulenanordnung können ganz oder teilweise aus Faserverbundwerkstoff hergestellt werden.

Durch die Wahl der Fasern können die Materialeigenschaften in einem großen Bereich variiert werden. Vorzugsweise werden Kohlenstofffasern, Aramidfasern und/oder Glasfasern einzeln oder in Kombination verwendet.

Wie vorhergehend beschrieben, werden bevorzugt vorimprägnierte Fasern verwendet. Vorimprägnierte Fasern weisen eine thermoplastische oder duroplastische Imprägnierung auf. Die mit einer thermoplastischen Imprägnierung versehenen Fasern können vorteilhafterweise in Kombination zum Beispiel mit Kohlenstofffasern und/oder Glasfasern zu einem Hybridgarn verarbeitet werden. Dabei ist in einem Ausführungsbeispiel vorgesehen, dass die Hybridgarne während des Wickelprozesses erwärmt werden, so dass die Thermoplastfasern aufschmelzen um schon während des Wickelns eine Matrix des Verbundes zu bilden. Danach kann in einer Werkzeugform mittels Pressen die Form des Werkstücks angepasst werden. Möglich ist auch die Aufschmelzung der thermoplastischen Fasern nach dem Wickelprozess in einem Ofen oder in einer beheizten Werkzeugform und/oder im thermoplastischen Spritzgussverfahren.

Ein anderes Ausführungsbeispiel sieht Fasern vor, die nicht vorimprägniert sind. Diese Fasern werden, wie in den vorhergehenden Ausführungsbeispielen beschrieben, gewickelt. Nach dem Wickelprozess wird die Werkzeugform montiert oder das Werkstück inklusive Wickelkern in eine Werkzeugform gelegt und die Werkzeugform mit thermoplastischem oder duroplastischem Harz injiziert und das Werkstück ausgehärtet. Für die Verwendung einer duroplastischen Matrix sind alle Formen des Resin Transfer Moulding (RTM) Verfahren vorgesehen. Im Vergleich zum Pressen wird hierbei die Matrixmasse mittels Kolben von einer meist beheizten Vorkammer über Verteilerkanäle in die Werkzeugform eingespritzt, worin sie unter Wärme und Druck aushärtet.

Zur Entnahme der gehärteten Konsole aus der Werkzeugform werden auch hier die Platten der Werkzeugform auseinandergezogen und die Wickelspulen nach innen in die Werkzeugform gezogen.

In einer weiteren Ausführungsform ist es vorgesehen, die Werkzeugform vor oder nach der Zugabe von Harz in eine Spritzgussmaschine einzulegen und mit thermoplastischem oder duroplastischem Spritzguss das Werkstück zur erweiterten Formgebung zu umspritzen oder hinterspritzen.

Ein anderes Ausführungsbeispiel sieht vor, dass das kraftflussgerechte Wickeln von Fasern auf Hilfsmaterialien wie beispielsweise Kunststoffgeweben oder Gelegen oder Geweben aus Verstärkungsfasern durchgeführt wird, die die Fasern in Form und Lage halten bis diese durch eine Matrix fixiert werden. Bei der Verwendung von Geweben und Gelegen bilden diese mit der Matrix ebenso einen Faserverbund, der zur Aufnahme von Grundlasten, zur Einleitung von Lasten oder als kraftfreie Struktur dient.

Die Lenksäulenanordnung weist erfindungsgemäße Bauteile auf, die individuell ausgeformt in Fasertechnologie mit hohen Festigkeitseigenschaften und hohen Steifigkeitseigenschaften und einem geringen Gewicht dargestellt sind. Weiterhin ermöglicht das erfindungsgemäße Verfahren eine definierte kraftflussgerechte Auslegung derartiger Bauteile.

## Patentansprüche

1. Verfahren zur Herstellung eines Bauteils aus Faserverbundwerkstoff mit folgenden Schritten:
a) Wickeln von Fasern entlang vorgegebener Bahnen um wenigstens eine Wickelspule (12) eines Wickelkerns (11);
b) Einbringen eines aushärtbaren Harzes in die Fasern oder eine Werkzeugform (18);
c) Aushärten des Harzes und Bildung des Faserverbundbauteils;
d) Entnahme der wenigstens einen Wickelspule (12) nach innen in den Wickelkern (11);
e) Entnahme des Wickelkerns (11) und Freisetzen des Faserverbundbauteils;
**gekennzeichnet dadurch, dass**
0) vor dem Wickeln ein oder mehrere Funktionselemente (13) an vordefinierten Stellen auf dem Wickelkern (11) positioniert werden, um durch die daran anschließenden Verfahrensschritte mit den Fasern verbunden zu werden, um mit dem Faserverbundbauteil ein einstückiges Bauteil zu bilden.

2. Verfahren zur Herstellung eines Bauteils aus Faserverbundwerkstoff mit folgenden Schritten:
a) Wickeln von Fasern (14) entlang vorgegebener Bahnen um wenigstens eine Wickelspule (12) eines Wickelkerns (11), wobei die Fasern (14) mit einem aushärtbaren Harz getränkt sind;
b) Aushärten des Harzes und Bildung des Faserverbundbauteils;
c) Entnahme der wenigstens einen Wickelspule (12) nach innen in den Wickelkern (11);
d) Entnahme des Wickelkerns (11) und Freisetzen des Faserverbundbauteils;
**gekennzeichnet dadurch, dass**
0) vor dem Wickeln ein oder mehrere Funktionselemente (13) an vordefinierten Stellen auf dem Wickelkern (11) positioniert werden, um durch die daran anschließenden Verfahrensschritte mit den Fasern verbunden zu werden, um mit dem Faserverbundbauteil ein einstückiges Bauteil zu bilden.

3. Verfahren zur Herstellung eines Faserverbundbauteils nach Anspruch 1 bis 3, **dadurch gekennzeichnet, dass** in einem Verfahrensschritt vor dem Wickeln ein Hilfsmaterial auf den Wickelkern (11) aufgebracht wird, das die Fasern in Form und Lage hält bis diese durch Aushärten des Harzes fixiert sind.

4. Bauteil aus Faserverbundwerkstoff, hergestellt nach einem Verfahren gemäß einem der Ansprüche 1 bis 3.

5. Bauteil aus Faserverbundwerkstoff nach Anspruch 4, **dadurch gekennzeichnet, dass** der faserverstärkte Kunststoff eine Kombination verschiedenartiger Faserstrukturen mit gleichgerichteten Fasern aufweist.

6. Bauteil aus Faserverbundwerkstoff nach einem der vorhergehenden Ansprüche 4 bis 5, **dadurch gekennzeichnet, dass** das Bauteil unter Verwendung eines Wickelkerns (11) gefertigt ist, der vor der Montage des Bauteils in einer Anordnung von dem Bauteil getrennt und nicht in der Anordnung enthalten ist.

7. Bauteil aus Faserverbundwerkstoff nach Anspruch 6, **dadurch gekennzeichnet, dass** das Bauteil (14) eine Anzahl von Funktionselementen (13) aufweist, die nach dem Wickelvorgang und dem Aushärten mit dem faserverstärkten Kunststoff fest verbunden sind.

8. Bauteil nach Anspruch 7, **dadurch gekennzeichnet, dass** die Funktionselemente (13) ausgewählt sind aus der Gruppe, die Befestigungselemente (77), Führungen, Bewegungsbegrenzungen, Lager (20) und Halter für Kabelbäume umfasst.

9. Bauteil aus Faserverbundwerkstoff nach einem der vorhergehenden Ansprüche Anspruch 4 bis 8, **dadurch gekennzeichnet, dass** das Bauteil im Kraftfluss einer eines Kraftfahrzeugaufbaus und einer Karosserie liegt und entlang des Kraftflusses aus faserverstärkten Kunststoff, bei dem die Fasern gewickelt sind, gebildet ist.

## Claims

1. Method for manufacturing a component from a fiber-composite material, the method comprising the following steps:
a) winding fibers along predetermined tracks about at least one winding spool (12) of a winding core (11) ;
b) introducing a curable resin into the fibers or a mold (18);
c) curing the resin and forming the fiber-composite component;
d) removing the at least one winding spool (12) toward the inside into the winding core (11);
e) removing the winding core (11) and releasing the fiber-composite component;
**characterized in that**
0) prior to winding, in order to be connected by way of the subsequent method steps to the fibers so as to form an integral component with the fiber-composite component, one or a plurality of functional elements (13) are positioned at predetermined points on the winding core (11).

2. Method for manufacturing a component from a fiber-composite material, the method comprising the following steps:
a) winding fibers (14) along predetermined tracks about at least one winding spool (12) of a winding core (11), wherein the fibers (14) are soaked with a curable resin;
b) curing the resin and forming the fiber-composite component;
c) removing the at least one winding spool (12) toward the inside into the winding core (11);
d) removing the winding core (11) and releasing the fiber-composite component;
**characterized in that**
0) prior to winding, in order to be connected by way of the subsequent method steps to the fibers so as to form an integral component with the fiber-composite component, one or a plurality of functional elements (13) are positioned at predetermined points on the winding core (11).

3. Method for manufacturing a fiber-composite component, according to Claims 1 to 3, **characterized in that** in a method step prior to winding, an auxiliary material, which keeps the fibers in shape and position until the latter are fixed by curing of the resin, is applied onto the winding core (11).

4. Component from fiber-composite material, manufactured according to a method according to one of Claims 1 to 3.

5. Component from fiber-composite material according to Claim 4, **characterized in that** the fiber-reinforced plastics material is a combination of various types of fiber structures having identically oriented fibers.

6. Component from fiber-composite material according to one of preceding Claims 4 to 5, **characterized in that** the component is made using a winding core (11) which prior to fitting of the component is contained in an assembly which is separate from the component and is not contained in the assembly.

7. Component from fiber-composite material according to Claim 6, **characterized in that** the component (14) has a number of functional elements (13) which after the winding operation and curing are fixedly connected to the fiber-reinforced plastics material.

8. Component according to Claim 7, **characterized in that** the functional elements (13) are selected from the group including fastening elements (77), guides, motion limiters, bearings (20), and brackets for wiring looms.

9. Component from fiber-composite material according to one of preceding Claims Claim 4 to 8, **characterized in that** the component lies in the flux of force of a motor-vehicle superstructure and of a body, and along the flux of force is formed from fiber-reinforced plastics material in which the fibers are wound.

## Revendications

1. Procédé de fabrication d'un composant en matériau renforcé par des fibres, comprenant les étapes suivantes :
a) enroulement de fibres le long de trajectoires prédéfinies autour d'au moins une bobine d'enroulement (12) d'un noyau d'enroulement (11) ;
b) introduction d'une résine durcissable dans les fibres ou dans un moule d'outil (18) ;
c) durcissement de la résine et formation du composant en composite renforcé par des fibres ;
d) enlèvement de l'au moins une bobine d'enroulement (12) vers l'intérieur dans le noyau d'enroulement (11) ;
e) enlèvement du noyau d'enroulement (11) et libération du composant en composite renforcé par des fibres ;
**caractérisé en ce que**
0) avant l'enroulement, un ou plusieurs éléments fonctionnels (13) sont positionnés au niveau d'endroits prédéfinis sur le noyau d'enroulement (11) afin d'être connectés aux fibres par les étapes de procédé subséquentes, afin de former avec le composant en composite renforcé par des fibres un composant d'une seule pièce.

2. Procédé de fabrication d'un composant en matériau composite renforcé par des fibres, comprenant les étapes suivantes :
a) enroulement de fibres (14) le long de trajectoires prédéfinies autour d'au moins une bobine d'enroulement (12) d'un noyau d'enroulement (11) ; les fibres (14) étant imbibées avec une résine durcissable ;
b) durcissement de la résine et formation du composant en composite renforcé par des fibres ;
c) enlèvement de l'au moins une bobine d'enroulement (12) vers l'intérieur dans le noyau de roulement (11) ;
d) enlèvement du noyau d'enroulement (11) et libération du composant en composite renforcé par des fibres ;
**caractérisé en ce que**
0) avant l'enroulement, un ou plusieurs éléments fonctionnels (13) sont positionnés au niveau d'endroits prédéfinis sur le noyau d'enroulement (11) afin d'être connectés aux fibres par les étapes de procédé subséquentes, afin de former avec le composant en composite renforcé par des fibres un composant d'une seule pièce.

3. Procédé de fabrication d'un composant en composite renforcé par des fibres selon les revendications 1 à 3, **caractérisé en ce que** dans une étape de procédé avant l'enroulement, un matériau auxiliaire est appliqué sur le noyau d'enroulement (11), lequel maintient les fibres dans leur forme et leur position jusqu'à ce que celles-ci soient fixées par le durcissement de la résine.

4. Composant en matériau composite renforcé par des fibres, fabriqué selon un procédé selon l'une quelconque des revendications 1 à 3.

5. Composant en matériau composite renforcé par des fibres selon la revendication 4, **caractérisé en ce que** le plastique renforcé par des fibres présente une combinaison de structures de fibres de types différents avec des fibres orientées dans le même sens.

6. Composant en matériau composite renforcé par des fibres selon l'une quelconque des revendications 4 à 5, **caractérisé en ce que** le composant est fabriqué en utilisant un noyau d'enroulement (11) qui est séparé du composant avant le montage du composant dans un agencement et qui n'est pas contenu dans l'agencement.

7. Composant en matériau composite renforcé par des fibres selon la revendication 6, **caractérisé en ce que** le composant (14) présente une pluralité d'éléments fonctionnels (13) qui, après l'opération d'enroulement et le durcissement sont connectés fixement au plastique renforcé par des fibres.

8. Composant selon la revendication 7, **caractérisé en ce que** les éléments fonctionnels (13) sont choisis parmi le groupe comprenant des éléments de fixation (77), des guides, des limiteurs de mouvement, des paliers (20) et des supports pour des faisceaux de câbles.

9. Composant en matériau composite renforcé par des fibres selon l'une quelconque des revendications revendication précédentes 4 à 8, **caractérisé en ce que** le composant est situé dans le flux de forces de l'un d'une caisse de véhicule automobile et d'une carrosserie et est formé le long du flux de forces à partir d'un plastique renforcé par des fibres, dans lequel les fibres sont enroulées.
